# EUROPÄISCHE PATENTANMELDUNG

(11) **EP 3 203 171 A1**
(43) Veröffentlichungstag der Anmeldung: **09.08.2017**
(21) Anmeldenummer: 17152176.8
(22) Anmeldetag: 19.01.2017
(51) Int. Cl.: F28D 9/00, F28F 9/02

(54) **STAPELSCHEIBENWÄRMETAUSCHER, INSBESONDERE FÜR EIN KRAFTFAHRZEUG**

(30) Priorität: 04.02.2016 DE 102016201712
(71) Anmelder: Mahle International GmbH, 70376 Stuttgart (DE)
(72) Erfinder: Dränkow, Andreas, 71296 Heimsheim (DE); Janson, Frank, 75417 Mühlacker (DE); Schmidgall, Stefan, 70378 Stuttgart (DE)
(74) Vertreter: BRP Renaud & Partner mbB Rechtsanwälte Patentanwälte Steuerberater

(57) **Zusammenfassung**

Die Erfindung betrifft einen Stapelscheibenwärmetauscher (1),
- mit einer Mehrzahl von Stapelscheiben (2), welche zur Ausbildung von ersten und zweiten Fluidkanälen (9a, 9b) zum Durchströmen mit einem ersten und zweiten Fluid (F₁, F₂) entlang einer Stapelrichtung (S) aufeinander gestapelt sind,
- wobei die Stapelscheiben (2) entlang der Stapelrichtung (S) zwischen einer ersten Endscheibe (4a) und einer zweiten Endscheibe (4b) angeordnet sind,
- wobei die Stapelscheiben Durchgangsöffnungen (5, 6) zur Ausbildung von Verteilerkanälen und von Sammlerkanälen (7, 8) aufweisen,
- wobei eine der ersten Endscheibe (4a) in Stapelrichtung (S) benachbarte erste Stapelscheibe (3) der Stapelscheiben (2) zumindest im Bereich ihrer Durchgangsöffnungen (5, 6) der ersten Stapelscheibe (4a) eben ausgebildet ist.
- wobei die erste Stapelscheibe (3) zwischen der ersten Endscheibe (4a) und einer zweiten Stapelscheibe (21) angeordnet ist,
wobei die zweite Stapelscheibe (21) mittels einer stoffschlüssigen Verbindung mit der ersten Endscheibe (4a) und der ersten Stapelscheibe (3) verbunden ist.

## Beschreibung

Die Erfindung betrifft einen Stapelscheibenwärmetauscher, insbesondere für ein Kraftfahrzeug, sowie ein Kraftfahrzeug mit einem solchen Stapelscheibenwärmetauscher.

Stapelscheibenwärmetauscher finden im Fahrzeugbau in vielfältiger Form Verwendung.

Herkömmliche Stapelscheibenwärmetauscher umfassen standardmäßig mehrere aufeinandergestapelte Stapelscheiben. Durch das Stapeln dieser Scheiben entstehen für die beiden Fluide fluidisch voneinander getrennte Fluidkanäle. Der so entstehende Stapelscheibenblock wird typischerweise in Stapelrichtung der Stapelscheiben nach oben durch eine erste Endscheibe und nach unten durch eine gegenüberliegende zweite Endscheibe begrenzt, die als Grundplatte mit einem Befestigungsflansch zum Befestigen des Stapelscheibenwärmetauschers an einer Komponente des Kraftfahrzeugs dient.

Die erste Endscheibe besitzt dabei typischerweise eine größere Scheibendicke als die einzelnen Stapelscheiben und einen umlaufenden, zur Stapelrichtung hin aufgestellten Rand. Der aus den Stapelscheiben gebildete sogenannte Stapelscheibenblock wird mit Hilfe der ersten Endscheibe fluidisch abgedichtet.

Sind an der ersten Endscheibe Durchzüge zur Anbindung eines Stutzens erforderlich, so kann es dazu kommen, dass die Abdichtung zwischen dem an der ersten Endscheibe ausgebildeten Durchzug und der benachbarten, ersten Stapelscheibe des Stapelscheibenblocks nicht mehr funktioniert. In diesem Fall könnte auf unerwünschte Weise in den zwischen der ersten Endscheibe und dem zwischen der ersten Stapelscheibe gebildeten Fluidkanal ein Fluid eindringen. Um dies zu verhindern, müssen die Stapelscheiben über eine dichte Verlötung der aufgestellten Ränder von erster Endscheibe und erster Stapelscheibe abgedichtet werden. Diese Verlötung gestaltet sich jedoch als technisch relativ aufwändig.

Vor diesem Hintergrund ist es eine Aufgabe der vorliegenden Erfindung, bei der Entwicklung von Stapelscheibenwärmetauscher mit besonders geringen Herstellungskosten neue Wege aufzuzeigen.

Diese Aufgabe wird durch den Gegenstand der unabhängigen Patentansprüche gelöst. Bevorzugte Ausführungsformen sind Gegenstand der abhängigen Patentansprüche.

Grundgedanke der Erfindung ist demnach, einen Stapelscheibenwärmetauscher mit einer ebenen ersten Endscheibe ohne Rand auszubilden, diese zwischen der oberen Endscheibe und der in Stapelrichtung zur ersten Endscheibe benachbarten, zweiten Endscheibe anzuordnen und die beiden besagten Stapelscheiben stoffschlüssig mit der ersten Endscheibe zu verbinden. Bevorzugt kann diese stoffschlüssige Verbindung eine Lötverbindung sein. Auf diese Weise kann auf konstruktiv besonders einfache Weise die erforderliche Dichtwirkung zwischen der ersten Endscheibe und der ersten Stapelscheibe erreicht werden, ohne dass hierfür an der ersten Endscheibe ein Rand bereitgestellt werden müsste, der mit dem Rand der ersten Stapelscheibe zu verlöten ist. Dies bedeutet für die Herstellung des Stapelwärmetauschers nicht unerhebliche Vereinfachungen, womit deutliche Kosteneinsparungen einhergehen.

Ein erfindungsgemäßer Stapelscheibenwärmetauscher umfasst eine Mehrzahl von Stapelscheiben, welche zur Ausbildung von ersten und zweiten Fluidkanälen für ein erstes bzw. zweites Fluid entlang einer Stapelrichtung aufeinander gestapelt sind. Die Stapelscheiben sind entlang der Stapelrichtung zwischen einer ersten Endscheibe und einer der ersten Endscheibe gegenüberliegenden zweiten Endscheibe angeordnet. Die Stapelscheiben weisen Durchgangsöffnungen zur Ausbildung von Verteilerkanälen und von Sammlerkanälen für die beiden thermisch miteinander wechselwirkenden Fluide auf. Erfindungsgemäß ist die der ersten Endscheibe in Stapelrichtung benachbarte erste Stapelscheibe zumindest im Bereich ihrer Durchgangsöffnungen der ersten Stapelscheibe eben ausgebildet. Weiterhin ist die erste Stapelscheibe in der Stapelrichtung zwischen der Endscheibe und der zur ersten Stapelscheibe benachbarten, zweiten Stapelscheibe angeordnet. Erfindungsgemäß ist die zweite Stapelscheibe mittels einer stoffschlüssigen Verbindung, insbesondere mittels einer Lötverbindung, mit der ersten Stapelscheibe und der ersten Endscheibe verbunden.

Bei einer bevorzugten Ausführungsform ist wenigstens eine Durchgangsöffnung zumindest einer Stapelscheibe - mit Ausnahme der ersten Stapelscheibe - als Durchzug ausgebildet. Diese Maßnahme erlaubt eine technisch einfache Realisierung von Verteiler- und Sammlerkanälen zum Verteilen bzw. Sammeln der beiden Fluide auf die ersten und zweiten Fluidkanäle bzw. aus den ersten und zweiten Fluidkanälen.

Besonders bevorzugt ist die erfindungswesentliche stoffschlüssige Verbindung im Bereich der Durchgangsöffnung der ersten Endscheibe angeordnet. Auf diese Weise wird im Bereich des Durchzugs eine besonders gute Dichtwirkung erzielt.

Bei einer weiteren vorteilhaften Weiterbildung weisen die Stapelscheiben einen zumindest teilweise, vorzugsweise vollständig, umlaufenden, aufgestellten Rand auf. Dies erlaubt es, die einzelnen Stapelscheiben, mit einer zwischen den Rändern benachbarter Stapelscheiben ausgebildeten Lötverbindung aneinander zu befestigen.

Besonders bevorzugt ist die der Endscheibe in Stapelrichtung benachbarte, erste Stapelscheibe abgesehen vom aufgestellten Rand vollständig eben ausgebildet.

Mit einer solchen, konstruktiv besonders einfach ausgebildeten ersten Stapelscheibe gehen besonders geringe Herstellungskosten einher.

Besonders bevorzugt weist die erste Endscheibe keinen aufgestellten Rand auf, wie dieser bei den Stapelscheiben vorhanden ist. Dies bedeutet, dass die erste technisch Endscheibe besonders einfach und somit kostengünstig hergestellt werden kann.

Bei einer weiteren bevorzugten Ausführungsform weist die erste Endscheibe Durchgangsöffnungen auf, welche bzgl. der Stapelrichtung mit den Durchgangsöffnungen der ersten Stapelscheibe fluchten.

Bei einer weiteren bevorzugten Ausführungsform liegt die erste Stapelscheibe im Bereich der Durchgangsöffnungen flächig an der ersten Endscheibe an. Diese Maßnahme vereinfacht das Anbringen der erfindungswesentlichen stoffschlüssigen Verbindung zur Abdichtung der ersten und zweiten Stapelscheibe gegen die erste Endscheibe.

Bei einer vorteilhaften Weiterbildung besitzen alle Stapelscheiben einschließlich der ersten Stapelscheibe im Wesentlichen dieselbe Stapelscheibendicke. Diese Maßnahme führt zu einem vereinfachten Fertigungsprozess für die Stapelscheiben, die wenigstens teilweise als Gleichteile ausgeführt werden können. Damit gehen nicht erhebliche Kostenvorteile bei der Fertigung einher.

Bei einer vorteilhaften Weiterbildung sind die Durchgangsöffnungen der ersten Stapelscheibe nicht als Durchzüge ausgebildet. Diese Maßnahme vereinfacht den Herstellungsprozess der ersten Stapelscheibe.

Bei einer anderen bevorzugten Ausführungsform weist zumindest eine Durchgangsöffnung der ersten Stapelscheibe in einem Längsschnitt entlang der Stapelrichtung einen größeren Öffnungsquerschnitt auf als die in Stapelrichtung benachbarte Durchgangsöffnung der ersten Endscheibe.

Bei einer dazu alternativen Ausführungsform weist zumindest eine Durchgangsöffnung der ersten Stapelscheibe in dem Längsschnitt entlang der Stapelrichtung einen kleineren Öffnungsquerschnitt auf als die in Stapelrichtung benachbarte Durchgangsöffnung der ersten Endscheibe.

Bei einer anderen bevorzugten Ausführungsform ist wenigstens eine Durchgangsöffnung, die in der zweiten Stapelscheibe vorhanden ist, von der ersten Stapelscheibe verschlossen.

Besonders zweckmäßig weist die erste Endscheibe zumindest einen Öffnungskragen auf, der eine Durchgangsöffnung der ersten Endscheibe einfasst. Besagter Öffnungskragen steht bzgl. der Stapelrichtung von der ersten Stapelscheibe weg, vorzugsweise in Stapelrichtung, ab. Ein solcher Öffnungskragen erlaubt die stabile Anbringung eines Stutzens oder dergleichen am der Durchgangsöffnung.

Bei einer weiteren bevorzugten Ausführungsform weist der Stapelscheibenwärmetauscher zumindest einen Stutzen auf, der mit einem Endabschnitt in die in der ersten Endscheibe vorgesehene Durchgangsöffnung eingesetzt ist. Besonders bevorzugt schließt der Stutzen dabei bündig mit der ersten Endscheibe ab. Auch diese Maßnahme erleichtert Ein solcher Öffnungskragen erlaubt die stabile Anbringung eines Stutzens oder dergleichen.

Bei einer vorteilhaften Weiterbildung weist der Stutzen eine Umfangswand mit einer stirnseitigen Öffnung auf, welche fluidisch mit der Durchgangsöffnung der ersten Endscheibe kommuniziert. In der Umfangswand ist im Abstand zur stirnseitigen Öffnung eine nach außen abstehende Wulst ausgebildet, welche am Öffnungskragen der Durchgangsöffnung der ersten Endscheibe anliegt. Ein derartig ausgebildeter Wulst erlaubt eine mechanisch besonders stabile Fixierung des Stutzens an der ersten Endscheibe.

Bei einer weiteren bevorzugten Ausführungsform sind in wenigstens einer Stapelscheibe mit Ausnahme der ersten Stapelscheibe Turbulenzerzeugungselemente für das durch die ersten und/oder zweiten Fluidkanäle strömende erste bzw. zweite Fluid ausgebildet. Mittels solcher Turbulenzerzeugungselemente kann der Wärmeaustausch zwischen den beiden Fluiden erhöht werden, was zu einer verbesserten Wirkungsgrad des Wärmetauschers führt.

Besonders zweckmäßig sind die Turbulenzerzeugungselemente als rippenartige Strukturen ausgebildet. Turbulenzerzeugungselemente in Form solcher Rippenstrukturen können im Zuge der Herstellung mittels geeigneter Umformprozesse besonders einfach und somit kostengünstig an den Stapelscheiben ausformt werden.

Die Erfindung betrifft weiterhin ein Kraftfahrzeug mit einem voranstehend vorgestellten Stapelscheibenwärmetauscher. Die voranstehend erläuterten Vorteile des Stapelscheibenwärmetauschers übertragen sich daher auch auf das erfindungsgemäße Kraftfahrzeug.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:
- Fig. 1: ein Beispiel eines erfindungsgemäßen Stapelscheibenwärmetauschers,
- Fig. 2: den Stapelwärmetauscher der Figur 1 in einem Längsschnitt im Bereich einer Durchgangsöffnung,
- Fig. 3: eine Variante des Stapelwärmetauschers der Figur 1,
- Fig. 4: eine weitere Variante des Stapelwärmetauschers der Figur 1,

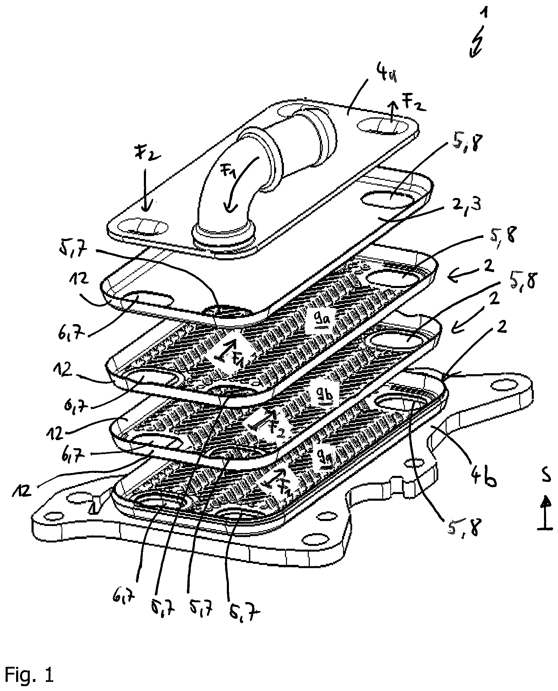

Figur 1 illustriert ein Beispiel eines erfindungsgemäßen Stapelscheibenwärmetauschers 1 in einer Explosionsdarstellung. Der Stapelscheibenwärmetauscher 1 umfasst eine Mehrzahl von wannenförmigen Stapelscheiben 2, welche zur Ausbildung von ersten und zweiten Fluidkanälen 9a, 9b zum Durchströmen mit einem ersten bzw. zweiten Fluid F₁, F₂ entlang einer Stapelrichtung S aufeinander gestapelt sind. In den Stapelscheiben 2 - mit Ausnahme der ersten Stapelscheibe 3 - sind Turbulenzerzeugungselemente 19 für das durch die ersten und zweiten Fluidkanäle 9a, 9b strömenden erste bzw. zweite Fluid F₁, F₂ ausgebildet. Die Turbulenzerzeugungselemente 19 sind im Beispiel der Figuren als rippenartige Strukturen 20 realisiert.

Die erste Stapelscheibe 3 ist in Stapelrichtung S zwischen der ersten Endscheibe 4a und einer der ersten Stapelscheibe 3 benachbarten, zweiten Stapelscheibe 21 angeordnet. Die zweite Stapelscheibe 21 ist mittels einer stoffschlüssigen Verbindung, insbesondere mittels einer Lötverbindung, mit der ersten Stapelscheibe 3 und der ersten Endscheibe 4a verbunden. Die Stapelscheiben 2 sind entlang der Stapelrichtung S zwischen einer ersten Endscheibe 4a und einer der ersten Endscheibe 4a gegenüberliegenden zweiten Endscheibe 4b angeordnet.

Wie die Figur 1 erkennen lässt, weisen die Stapelscheiben 2 Durchgangsöffnungen 5, 6 zur Ausbildung von Verteilerkanälen 7 und von Sammlerkanälen 8, jeweils für die beiden Fluide F₁, F₂, auf. Die der ersten Endscheibe 4a in Stapelrichtung S benachbarte erste Stapelscheibe 3 ist zumindest im Bereich ihrer Durchgangsöffnungen 5, 6 der ersten Stapelscheibe 3 eben ausgebildet. Alle Stapelscheiben 2 einschließlich der ersten Stapelscheibe 3 besitzen im Wesentlichen dieselbe Stapelscheibendicke d. Die Stapelscheiben 2 weisen einen zumindest teilweise, vorzugsweise vollständig, umlaufenden, aufgestellten Rand 12 auf.

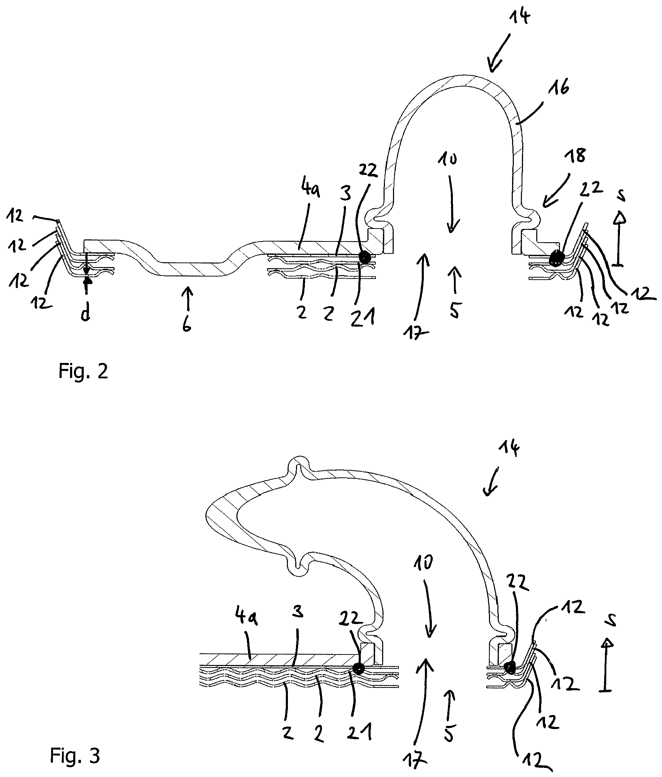

Die Figur 2 zeigt den Stapelwärmetauscher 1 der Figur 1 in einem Längsschnitt entlang der Stapelrichtung S. Wie Figur 1 in Kombination mit Figur 2 erkennen lässt, weist die erste Endscheibe 4a Durchgangsöffnungen 10 auf, welche bzgl. der Stapelrichtung S mit Durchgangsöffnungen 5, 6 der ersten Stapelscheibe 3 fluchten. Im Bereich ihrer Durchgangsöffnungen 5, 6 liegt die erste Stapelscheibe 3 gemäß Figur 2 flächig an der ersten Endscheibe 4a an.

Die Stapelscheiben 2 sind im Bereich ihrer aufgestellten Ränder 12 miteinander verlötet. Die erste Stapelscheibe 3 und die zweite Stapelscheibe 21 sind mittels einer in Figur 2 Lötverbindung - in Varianten des Beispiels ist auch eine andere geeignete stoffschlüssige Verbindung 22 denkbar - mit der ersten Endscheibe 4a verbunden. Besonders bevorzugt ist die erfindungswesentliche stoffschlüssige Verbindung 22 im Bereich der Durchgangsöffnungen 10 der ersten Endscheibe 4a angeordnet und fasst diese ein.

Wenigstens eine Durchgangsöffnung 5, 6 zumindest einer Stapelscheibe 2 - dies gilt ausdrücklich nicht für die ersten Stapelscheibe 3 - ist als Durchzug 11 ausgebildet. Die Durchgangsöffnungen 5, 6 der ebenen ersten Stapelscheibe 3 sind dabei nicht als Durchzüge ausgebildet. Wie Figur 1 erkennen lässt, sind im Beispielszenario der Figuren 1 und 2 die Durchgangsöffnungen 5, 6 der Stapelscheiben 2 entlang der Stapelrichtung S jeweils abwechselnd mit und ohne Durchzug 11 ausgebildet. Auf diese Weise kann das erste Fluid F₁ über die Durchgangsöffnungen 5 auf die ersten Fluidkanäle 9a verteilt und wieder aus diesen gesammelt werden. In analoger Weise kann das zweite Fluid F₂ über die Durchgangsöffnungen 6 auf die zweiten Fluidkanäle 9a verteilt und wieder aus diesen gesammelt werden, und zwar fluidisch getrennt vom ersten Fluid F₁.

Wie Figur 2 erkennen lässt, weisen die Durchgangsöffnungen 5, 6 der ersten Stapelscheibe 3 im Längsschnitt entlang der Stapelrichtung S einen größeren Öffnungsquerschnitt auf als die in Stapelrichtung S benachbarten Durchgangsöffnungen 10 der ersten Endscheibe 4a. Demgegenüber zeigt die Figur 3 eine zur Figur 2 alternative Variante, bei welcher in einem Längsschnitt entlang der Stapelrichtung S die Durchgangsöffnungen 5, 6 der ersten Stapelscheibe 3 einen kleineren Öffnungsquerschnitt aufweisen als die in Stapelrichtung benachbarten Durchgangsöffnungen 10 der ersten Endscheibe 4a. In beiden Varianten ist keine Verlötung der ersten Endscheibe 4a mit dem Rand 12 der ersten Stapelscheibe 3 erforderlich.

Wie die Figuren 2 und 3 weiter erkennen lassen, kann die erste Endscheibe 4a einen Öffnungskragen 13 aufweisen, der eine der Durchgangsöffnungen 10 der ersten Endscheibe 4a einfasst und in der Stapelrichtung S von der ersten Stapelscheibe 3 weg absteht. Weiterhin weist der Stapelscheibenwärmetauscher 1 einen Stutzen 14 auf. Der Stutzen 14 ist mit einem Endabschnitt 15 in besagte, in der ersten Endscheibe 4a vorhandene Durchgangsöffnung 10 eingesetzt. Der Stutzen 14 kann wie in den Figuren 2 und 3 gezeigt in Stapelrichtung S bündig mit der ersten Endscheibe 4a abschließen.

Der Stutzen 14 kann weiterhin rohrförmig ausgebildet sein und eine Umfangswand 16 mit einer stirnseitigen Öffnung 17 aufweisen, welche fluidisch mit der Durchgangsöffnung 10 der ersten Endscheibe 4a kommuniziert.

Wie die Figuren 2 und 3 anschaulich belegen, kann in der Umfangswand 16 des Stutzens 14 im Abstand zu seiner stirnseitigen Öffnung 17 eine nach außen abstehende Wulst 18 ausgebildet sein. Besagte Wulst 18 liegt am Öffnungskragen 13 der Durchgangsöffnung 10 der ersten Endscheibe 4a an und sorgt auf diese Weise für eine stabile Fixierung des Stutzens 14 an der ersten Endscheibe.

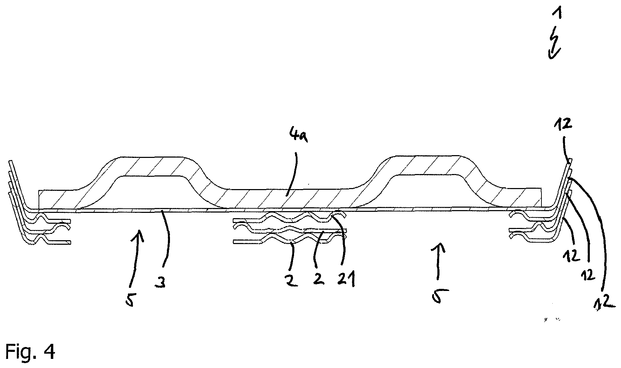

Die Figur 4 zeigt eine Variante des Stapelwärmetauschers 1 der Figuren 1 bis 3. Im Beispiel der Figur 4 sind die Durchgangsöffnungen 5 der zweiten Stapelscheibe 21, von der ersten Stapelscheibe 3 verschlossen.

## Patentansprüche

1. Stapelscheibenwärmetauscher (1), insbesondere Kühleinrichtung für ein Kraftfahrzeug,
- mit einer Mehrzahl von Stapelscheiben (2), welche zur Ausbildung von ersten und zweiten Fluidkanälen (9a, 9b) zum Durchströmen mit einem ersten und zweiten Fluid (F₁, F₂) entlang einer Stapelrichtung (S) aufeinander gestapelt sind,
- wobei die Stapelscheiben (2) entlang der Stapelrichtung (S) zwischen einer ersten Endscheibe (4a) und einer der ersten Endscheibe (4a) gegenüberliegenden, zweiten Endscheibe (4b) angeordnet sind,
- wobei die Stapelscheiben (2) Durchgangsöffnungen (5, 6) zur Ausbildung von Verteilerkanälen (7) und von Sammlerkanälen (8) aufweisen,
- wobei eine der ersten Endscheibe (4a) in Stapelrichtung (S) benachbarte erste Stapelscheibe (3) der Stapelscheiben (2) zumindest im Bereich ihrer Durchgangsöffnungen (5, 6) der ersten Stapelscheibe (4a) eben ausgebildet ist.
- wobei die erste Stapelscheibe (3) in Stapelrichtung (S) zwischen der ersten Endscheibe (4a) und einer zweiten Stapelscheibe (21) angeordnet ist und die zweite Stapelscheibe (21) mittels einer stoffschlüssigen Verbindung (22), insbesondere mittels einer Lötverbindung, mit der ersten Endscheibe (4a) und mit der ersten Stapelscheibe (3) verbunden ist.

2. Stapelscheibenwärmetauscher nach Anspruch 1,
**dadurch gekennzeichnet, dass**
die stoffschlüssige Verbindung (22) im Bereich der Durchgangsöffnung (5) der ersten Endscheibe (4a) angeordnet ist und einfasst diese vorzugsweise ein.

3. Stapelscheibenwärmetauscher nach Anspruch 1 oder 2,
**dadurch gekennzeichnet, dass**
wenigstens eine Durchgangsöffnung (5, 6) zumindest einer Stapelscheibe (2) mit Ausnahme der ersten Stapelscheibe (3) als Durchzug (11) ausgebildet ist.

4. Stapelscheibenwärmetauscher nach einem der vorhergehenden Ansprüche,
**dadurch gekennzeichnet, dass**
die Stapelscheiben (2, 3, 21) einen zumindest teilweise, vorzugsweise vollständig, umlaufenden, aufgestellten Rand (12) aufweisen.

5. Stapelscheibenwärmetauscher nach einem der vorhergehenden Ansprüche,
**dadurch gekennzeichnet, dass**
die erste Endscheibe (4a) keinen solchen Rand (12) aufweist.

6. Stapelscheibenwärmetauscher nach einem der vorhergehenden Ansprüche,
**dadurch gekennzeichnet, dass**
die erste Stapelscheibe (3) abgesehen vom aufgestellten Rand (12) vollständig eben ausgebildet ist.

7. Stapelscheibenwärmetauscher nach einem der vorhergehenden Ansprüche
**dadurch gekennzeichnet, dass**
die erste Endscheibe (4a) Durchgangsöffnungen (10) aufweist, welche bzgl. der Stapelrichtung (S) mit den Durchgangsöffnungen (5, 6) der ersten Stapelscheibe (S) fluchten.

8. Stapelscheibenwärmetauscher nach einem der vorhergehenden Ansprüche,
**dadurch gekennzeichnet, dass**
die erste Stapelscheibe (3) der Stapelscheiben (2) im Bereich ihrer Durchgangsöffnungen (5, 6) flächig an der ersten Endscheibe (4a) anliegt.

9. Stapelscheibenwärmetauscher nach einem der vorhergehenden Ansprüche,
**dadurch gekennzeichnet, dass**
alle Stapelscheiben (2) einschließlich der ersten Stapelscheibe (3) im Wesentlichen dieselbe Stapelscheibendicke (d) besitzen.

10. Stapelscheibenwärmetauscher nach einem der vorhergehenden Ansprüche,
**dadurch gekennzeichnet, dass**
keine der Durchgangsöffnungen (5, 6) der ersten Stapelscheibe (3) als Durchzüge (11) ausgebildet sind.

11. Stapelscheibenwärmetauscher nach einem der vorhergehenden Ansprüche,
**dadurch gekennzeichnet, dass**
wenigstens eine Durchgangsöffnung (5, 6), die in der zweiten Stapelscheibe (21) ausgebildet ist, welche in Stapelrichtung (S) benachbart zur ersten Stapelscheibe (3) angeordnet ist, von der ersten Stapelscheibe (3) verschlossen ist.

12. Stapelscheibenwärmetauscher nach einem der vorhergehenden Ansprüche,
**dadurch gekennzeichnet, dass**
die erste Endscheibe (4a) zumindest einen Öffnungskragen (13) aufweist, der eine Durchgangsöffnung (10) der ersten Endscheibe (4a) einfasst und in der Stapelrichtung (S) von der ersten Stapelscheibe (3) weg absteht.

13. Stapelscheibenwärmetauscher nach einem der vorhergehenden Ansprüche,
**dadurch gekennzeichnet, dass**
der Stapelscheibenwärmetauscher (1) zumindest einen Stutzen (14) umfasst, der mit einem Endabschnitt (15) in die Durchgangsöffnung (10) der ersten Endscheibe (4a) eingesetzt ist,
wobei der Stutzen (14) in Stapelrichtung (S) vorzugsweise bündig mit der ersten Endscheibe (4a) abschließt.

14. Stapelscheibenwärmetauscher nach Anspruch 13,
**dadurch gekennzeichnet, dass**
der Stutzen (14) eine Umfangswand (16) mit einer stirnseitigen Öffnung (17) aufweist, welche fluidisch mit der Durchgangsöffnung (10) der ersten Endscheibe (4a) kommuniziert,
wobei in der Umfangswand (16) im Abstand zur stirnseitigen Öffnung (17) eine nach außen abstehende Wulst (18) ausgebildet ist, welche am Öffnungskragen (13) der Durchgangsöffnung (10) der ersten Endscheibe (4a) anliegt.

15. Stapelscheibenwärmetauscher nach einem der vorhergehenden Ansprüche,
**dadurch gekennzeichnet, dass**
in wenigstens einer Stapelscheibe (2) mit Ausnahme der ersten Stapelscheibe (3) Turbulenzerzeugungselemente (19) für das durch die ersten und/oder zweiten Fluidkanäle (9a, 9b) strömende erste bzw. zweite Fluid (F₁, F₂) ausgebildet sind.

16. Stapelscheibenwärmetauscher nach Anspruch 15,
**dadurch gekennzeichnet, dass**
die die Turbulenzerzeugungselemente (19) als rippenartige Strukturen (20) ausgebildet sind.

17. Kraftfahrzeug mit einem Stapelscheibenwärmetauscher (1) nach einem der vorhergehenden Ansprüche.
